# EUROPÄISCHE PATENTSCHRIFT

(11) **EP 1 521 954 B1**
(45) Veröffentlichungstag und Bekanntmachung des Hinweises auf die Patenterteilung: **27.08.2008**
(21) Anmeldenummer: 03764902.7
(22) Anmeldetag: 13.07.2003
(51) Int. Cl.: G01N 1/16

(54) **BODENWASSER-PROBENNEHMER**
BED WATER SAMPLING DEVICE
DISPOSITIF DE PRELEVEMENT D'ECHANTILLONS D'EAU DE NAPPE PHREATIQUE

(30) Priorität: 14.07.2002 DE 10232623
(43) Veröffentlichungstag der Anmeldung: 13.04.2005
(73) Patentinhaber: Stiftung Alfred-Wegener-Insitut für Polar- und Meeresforschung, 27570 Bremerhaven (DE)
(72) Erfinder: SAUTER, Eberhard, J., 27721 Ritterhude (DE)
(86) Internationale Anmeldenummer: PCT/DE2003/002399
(87) Internationale Veröffentlichungsnummer: WO 2004/010111

(56) Entgegenhaltungen:
- DE-U- 29 621 644
- US-A- 3 368 408
- US-A- 5 364 297
- US-A- 5 473 952
- [Online] XP002263806 Gefunden im Internet: <URL: http://www.pol.ac.uk/provess/photographs/b _w_sampler> [gefunden am 2003-12-03] in der Anmeldung erwähnt das ganze Dokument
- PATENT ABSTRACTS OF JAPAN vol. 2002, no. 10, 10. Oktober 2002 (2002-10-10) & JP 2002 161693 A (KOKEN BORING MACH CO LTD), 4. Juni 2002 (2002-06-04)
- PATENT ABSTRACTS OF JAPAN vol. 2000, no. 08, 6. Oktober 2000 (2000-10-06) & JP 2000 144701 A (KAJIMA CORP), 26. Mai 2000 (2000-05-26)

## Beschreibung

Die Erfindung bezieht sich auf einen Bodenwasser-Probennehmer zur simultanen Gewinnung von mehreren Wasserproben aus der untersten Wassersäule auf unterschiedlichen Höhen oberhalb eines Gewässerbodens mit mehreren zylinderförmigen Probenbehältern, die zumindest auf einer Stirnseite eine über einen zeitgesteuerten Auslöser betätigbare Verschlussvorrichtung aufweisen und an einer zentralen, in einem Bodenelement endenden und an ihrem gegenüber liegenden Ende über ein Stahlseil auf dem Gewässerboden absetzbaren Haltestange höhenverstellbar in horizontaler Ausrichtung angeordnet sind.

Die Gewinnung von Wasserproben aus der untersten Wassersäule, dem Bodenwasser über einem Gewässerboden dient geochemischen, ozeanographischen und (mikro-)biologischen Untersuchungen der Übergangszone zwischen dem Gewässerboden (Sediment) und der darüber liegenden Wassersäule. Verschiedene Austauschprozesse zwischen diesen Kompartimenten generieren hier steile Parametergradienten, beispielsweise in geochemischen Stoffkonzentrationen und Partikelgehalten, die mit biologischen Lebensprozessen sehr eng verknüpft sind. Ein Bodenwasser-Probennehmer soll eine hochauflösende Beprobung, d.h. eine Beprobung in mehreren Abständen vom Gewässerboden, dieser Übergangszone ermöglichen, um neue Einsichten in die dort herrschenden Transport- und Reaktionsprozesse zu ermöglichen.

Grundsätzlich sind zwei Arten von Bodenwasser-Probennehmern zu unterscheiden: Anordnungen, welche die Wasserproben aus unterschiedlichen Höhen über Grund ansaugen und solche, mit denen das Wasser mittels Probenbehältern, die in unterschiedlicher Höhe über Grund zumeist horizontal angeordnet sind, "gefangen" wird. Zur erstgenannten Gruppe (Ansaugende Probennahme) gehört beispielsweise der aus der **Veröffentlichung I** von L. Thomsen et al.: "An instrument for aggregate studies in the benthic boundary layer" (Marine Geology, 135 (1996) pp 153-156) bekannte Wasserschöpfer ("BIOPROBE") für Wassertiefen bis 6000 m, bei dem in einem Dreibeingestell mehrere Probenflaschen vertikal angeordnet sind. Über Ansaugschläuche unterschiedlicher Längen werden die Wasserproben aus verschiedenen Höhen in der Wassersäule in die Flaschen angesogen. Nachteilig ist hier, dass die Bodenwasserpartikel zwar beprobt werden können, jedoch wird ihre ursprüngliche Form durch das Einsaugen der Wasserprobe durch den Ansaugschlauch verändert. Ebenso kann es beim Ansaugvorgang zu Ausgasungsprozessen in der Wasserprobe kommen. Insbesondere im Wasser gelöste Gase gehören jedoch häufig zu den zu untersuchenden Parametern. Der Probennehmer wird über ein Einleiterkabel von der Wasseroberfläche, zumeist von einem Schiff aus ausgelöst. Da die Beprobung relativ lange dauert (30 bis 60 Minuten) kann durch eine Drift des Schiffes während der Beprobung eine Beschädigung des Einleiterkabels durch Verschlingungen eintreten. Eine Reparatur des Einleiterkabels mit einer Verkürzung und erneuten Vergießung des Tiefseesteckers ist jedoch sehr zeit- und auch kostenaufwändig. Das Kabel wird für einen Messtag unbenutzbar. Auch wenn der Probennehmer in ein weitgespreiztes Dreibein-Gestell montiert ist, um strömungsbedingte Verwirbelungen und damit eine Vermischung der aus ursprünglich unterschiedlichen Horizonten stammenden Wasserproben zu minimieren, so kann dieser Effekt nicht völlig ausgeschlossen werden. Zudem stellen auch die Ansaugschnorchel selbst Strömungshindernisse dar, sodass insbesondere die höheren Beprobungshorizonte von den jeweils weiter hinunter reichenden Schnorcheln strömungsdynamisch beeinträchtigt werden.

Modifikationen des bekannten Wasserschöpfers BIOPROBE sind der **Veröffentlichung II** von L. Thomsen: "Processes in the benthic boundary layer at continental margins and their implication for the benthic carbon cycle" (Journal of Sea Research 41 (1999) pp 73-86) zu entnehmen. Bei BIOPROBE III ist ein hydrodynamisch geformter Probennehmer exzentrisch an einem mechanisch drehbaren Arm gelagert, der zur Vermeidung einer Mischbeprobung vor Beprobungsbeginn über einen Strömungssensor in der Bodenströmung ausgerichtet wird. Der Probennehmer ist vertikal angeordnet und weist in unterschiedlichen, aber fest vorgegebenen Höhen in einem relativ kleinen Höhenbereich (zwischen 5 und 40 cm) vier, je 10 I große Probenkammern mit Einlassdüsen auf, durch die das Probenwasser einströmt. Durch das Düsenprinzip ist eine bezüglich des Erhaltes von Partikeln ungestörte und gasverlustfreie Probennahme sowie ein vorheriges Durchspülen der Probenbehälter mit Original-Bodenwasser jedoch weiterhin problematisch. Über eine Batterieversorgung ist BIOPROBE III zwar auch autark, ohne Einleiterkabel einsetzbar. Da es aber nunmehr als Freifallgerät (Lander) in das Wasser abgeworfen wird, ist jedoch eine zeitaufwändige Bergungsaktion erforderlich.

Der nächstliegende **Stand der Technik**, von dem die vorliegende Erfindung ausgeht, wird von einem Bodenwasser-Probennehmer mit einer horizontalen Anordnung der Probenbehälter gebildet, wie er in dem Buch von A. Murdoch et al.: "Handbook of techniques for Aquatic Sediments Sampling" Second Edition, pp 105.106, beschrieben wird. Bei diesem gattungsbildenden Bodenwasser-Probennehmer für die Tiefsee sind an einer zentralen Haltestange aus Aluminium in unterschiedlichen, veränderbaren Höhen über einen Höhenbereich von 1,6 m horizontal mehrere Probenflaschen als zylinderförmige Probenbehälter mit einem Füllvolumen von je 3 I drehfest angeordnet. Die zentrale Haltestange ist zur Stabilisierung fest mit einer Bodenplatte als Bodenelement verbunden, und wird von drei Auslegern abgestützt. Diese wiederum sind über Drahtseile mit einem Dreibein am oberen Ende der Haltestange verspannt. Hier greift auch das einfache Stahlseil zum Fieren des Probennehmers an. Beim Abfieren wird der Probennehmer und damit die Probenflaschen nicht in der Strömung ausgerichtet. Die Probenflaschen weisen auf ihrer einen Stirnseite eine Verschlussvorrichtung in Form eines verschiebbaren Kolbenbodens auf. Die Verschiebung erfolgt pneumatisch über eine Druckluftflasche und wird über einen druckgekapselten, elektronischen Zeitauslöser gesteuert. Die Probenflaschen müssen sich am geöffneten Kolbenboden vorbei mit Probenwasser füllen, wodurch im Flascheninneren jedoch ein Staudruck entsteht, der zu einer Störung der Probennahme, beispielsweise durch Verlust gelöster Gase, führen kann. Weitere Störungen bei der Probennahme können dadurch hervorgerufen werden, dass die Probenflaschen nicht in Strömungsrichtung ausgerichtet sind, sodass keine Durchspülung der Probenbehälter mit Original-Bodenwasser erfolgen kann, und dass die Abspannseile der Haltestange die Strömung stören, sodass Mischproben durch Verwirbelung entstehen.

Ein Bodenwasser-Probennehmer mit horizontal durchströmbaren Probenflaschen ist von dem Länder-Verbundprojekt "PROVESS" - Processes of Vertical Exchange in Self Seas - MAST III (vgl. PROVESS homepage von Rose Player, Proudman Oceanographic Laboratory, unter http://www.pol.ac.uk/provess/html/main.html, last updated on 17th April2001, Stand 19.06.2002) bekannt (vgl. Fotografie auf Seite http://www.po.ac.uk/provess/photographs/b_w_sampler.gif, Stand 19.06.2002). Der Fotografie ist zu entnehmen, dass zehn transparente Probenflaschen mit geringem Abstand horizontal übereinander an einem Haltegerüst aus zwei parallelen Haltestangen angeordnet sind, das zentral in einem ausladenden, mit Grundgewichten beschwerten Vierbeingestell befestigt ist. Die Probenflaschen weisen offensichtlich an jeder Stirnseite einen Verschlussdeckel auf, die über einen Seilmechanismus mechanisch betätigbar sind. Somit können die Probenflaschen zur Probennahme vom Probenwasser frei durchspült werden. Weitere Details sind der Fotografie jedoch nicht zu entnehmen. Auch die PROVESS-Homepage gibt über den dargestellten Probennehmer keine weiteren Informationen. Zu erkennen ist jedoch, dass die Probenflaschen fest mit dem Haltegerüst verbunden und von dem Vierbeingestell umgeben sind. Eine gezielte Ausrichtung der Probenflaschen in die Bodenströmung zum Durchspülen mit Original-Bodenwasser und zum Fortspülen von beim Aufsetzen in die Behälter gelangter Sedimentpartikel ist somit nicht möglich, außerdem wird die Bodenströmung durch das Vierbeingestell, das auch noch Querverstrebungen aufweist, strömungsdynamisch gestört, sodass wiederum Mischproben durch Verwirbelung entstehen.

Ausgehend von dem weiter oben gewürdigten nächstliegenden Stand der Technik ist die **Aufgabe** für die vorliegende Erfindung darin zu sehen, einen gattungsgemäßen Bodenwasser-Probennehmer zur simultanen Gewinnung von mehreren ungestörten Wasserproben auf unterschiedlichen Höhen aus der untersten Wassersäule oberhalb eines Gewässerbodens mit mehreren zylinderförmigen Probenbehältern in horizontaler Anordnung so weiterzubilden, dass ungestörte und hochauflösende Probennahmen unter weitgehender Erhaltung des Originalzustandes des Probenwassers aus der bodennahen Strömung in der stoff- und partikelhaltigen Übergangszone zwischen dem Gewässerboden und der Wassersäule möglich sind. Dabei soll der weitergebildete Bodenwasser-Probennehmer eine möglichst schnelle Probennahme ermöglichen sowie einfach und robust in seiner Handhabung sein. Weiterhin soll gewährleistet werden, dass Partikel, die beim Aufsetzen des Probennehmers auf den Gewässerboden aufgewirbelt wurden, sowie Wasser aus anderen Schichten der Wassersäule vor dem Schließvorgang mit Original-Bodenwasser aus den Behältern herausgespült werden.

Als **Lösung** für diese Aufgabenstellung ist bei einem gattungsgemäßen Bodenwasser-Probennehmer der eingangs beschriebenen Art deshalb erfindungsgemäß vorgesehen, dass die zentrale Haltestange zwischen einem beschwerten Grundrahmen als Bodenelement und dem Stahlseil leichtgängig und frei drehbar befestigt und mit einer Strömungsfahne verbunden ist, dass der zeitgesteuerte Auslöser in den beschwerten Grundrahmen druckgekapselt eingebaut und erst durch dessen anhaltendes Aufsetzen auf den Gewässerboden für eine vorgegebene Zeitspanne automatisch aktiviert wird und dass die Probenbehälter auch auf der anderen Stirnseite eine ebenfalls über den zeitgesteuerten Auslöser betätigbare Verschlussvorrichtung aufweisen, wie in Anspruch 1 definiert.

Der erfindungsgemäße Bodenwasser-Probennehmer vereinigt eine hohe Funktionalität gemäß der theoretischen Anforderungen an eine hochwertige Wasserbeprobung, zu nennen ist hier beispielsweise eine vermischungsfreie, sogfreie Beprobung der verschiedenen Wasserhorizonte, mit einem besonderen Maß an Feldtauglichkeit, hier insbesondere durch die freie Wahl des Absenkseiles, durch eine kurze Grundstandzeit und damit verbundenen minimalen Anforderungen bezüglich der Schiffspositionierung. Wesentlich hierfür ist die Verbindung des Auslöserkonzeptes zum gleichzeitigen Verschließen aller Probenbehälter auf beiden Seiten mit deren leicht und automatisch in der Bodenströmung erfolgenden Ausrichtung. Dabei wird durch die beidseitige Öffnung der Probenbehälter vor der Probennahme deren freie Durchströmung mit Original-Bodenwasser ermöglicht. Im Augenblick des Verschließens der Probenbehälter an beiden Enden wird somit eine Wasserprobe in freiem Strömungszustand "eingefangen" und damit weitgehend im Originalzustand erhalten. Die Wasserproben werden sogfrei gewonnen, sodass ein fehlerverursachender Gasverlust durch Ausgasen, bedingt durch die Herabsetzung der Löslichkeit von Gasen im Wasser aufgrund eines sogbedingten Unterdrucks, in der Wasserprobe vermieden wird. Für die Strömungsausrichtung sorgt eine ausreichend große Strömungsfahne, die fest mit der zentralen, frei drehbar gelagerten Haltestange verbunden ist. Diese ist in ihrer Größe so bemessen, dass auch schwache Strömungen in der bodennahen Gewässerzone ausreichen, um die Probenbehälter an der zentralen Haltestange in die Strömung zu drehen und nachzuführen.

Des Weiteren sorgt der zeitgesteuerte Auslöser für eine Probennahme in ungestörten Strömungsverhältnissen. Die Probenbehälter werden erst verschlossen, wenn die durch das Aufsetzen der Messanordnung auf den Gewässerboden verursachten Beeinträchtigungen abgeklungen sind. Die automatische Aktivierung des Auslösers erfolgt beim Aufsetzen des erfindungsgemäßen Bodenwasser-Probennehmers auf den Gewässergrund mechanisch durch ausreichend langes Hochdrücken, beispielsweise für eine Minute, einer unterhalb eines schweren Grundrahmens angeordneten Auslöserplatte. Dadurch wird ein vorzeitiges Verschließen der Probenbehälter, beispielsweise durch versehentliches Aufsetzen des Probennehmers noch an Bord des Schiffes beim Aussetzvorgang, weitgehend ausgeschlossen. Außerdem werden aufgrund der rein mechanischen Betätigung keine Steuerimpulse über ein empfindliches Einleiterkabel von der Wasseroberfläche her benötigt. Über eine integrierte Zeitsteuerung im Auslöser, hierbei kann es sich beispielsweise um eine Zeitelektronik handeln, die in Abhängigkeit von ihrer Druckkapselung für Wassertiefen von 6000 m und mehr einsetzbar ist, erfolgt nach dessen Aktivierung wählbar zeitverzögert, beispielsweise wenige Minuten nach dem Absetzen des Probennehmers, wiederum die Aktivierung der Verschlussvorrichtungen an den Probenbehältern. Somit sorgen zwei eingebaute Zeitschleifen für den sicheren und fehlerfreien Betrieb des Bodenwasser-Probennehmers nach der Erfindung.

Günstig für die äußerst geringe Beeinflussung der Bodenströmung durch den Bodenwasser-Probennehmer ist weiterhin, dass seine Konstruktion gänzlich ohne strömungsbehindernde Außenstreben und Abspannungen auskommt. Eine strömungsdynamische Vermischung von Bodenwasserschichtungen durch künstliche Turbulenzen wird vermieden. Die stabile Vertikalposition des Gerätes auf dem Gewässergrund wird durch den beispielsweise mit Bleigewichten beschwerten Grundrahmen erreicht. Der erfindungsgemäße Bodenwasser-Probennehmer ist tiefseegeeignet und kann in Abhängigkeit von der Stabilität der Druckkapselung des Auslösers in Wassertiefen von 6000 m und mehr eingesetzt werden. Für die Probennahme wird insgesamt nur eine Grundstandzeit von 5 Minuten bis maximal 10 Minuten benötigt. In einem derartig kurzen Zeitintervall ist die ausreichend ortsbezogene Positionierung eines Schiffes oberhalb des Probennehmers ohne Weiteres möglich, sodass das Auftreten von Verschlingungen und Verknickungen am absenkenden Stahlseil, hervorgerufen durch erforderliches Nachfieren beim Wegdriften des Schiffes durch Wind und Oberflächenströmungen mit großer Sicherheit ausgeschlossen werden kann.

Wesentlicher Vorteil des Bodenwasser-Probennehmers nach der Erfindung ist die Probennahme aus dem Bodenwasser als ungestörte Momentaufnahme. Hierfür ist es wichtig, dass die Bodenströmung die zylindrischen Probenbehälter zunächst frei durchströmen kann. Dazu weisen die Probenbehälter an beiden Stirnseiten Verschlussvorrichtungen auf, die im geöffneten Zustand einen relativ großen Querschnitt der Probenbehälter freigeben. Gemäß einer Ausgestaltung des Bodenwasser-Probennehmers ist es dabei vorteilhaft, wenn die beiden Verschlussvorrichtungen jedes Probenbehälters Verschlussklappen aufweisen, die im geöffneten Zustand gegen einen rückstellenden Gummizug über eine mit einem Korrosionsdraht verriegelte Auslöserwelle fixiert sind, wobei der Korrosionsdraht durch die Aktivierung des zeitgesteuerten Auslösers unter eine zum Bersten führende elektrische Spannung gesetzt wird. Eine derartige Auslöseranordnung ist robust und zuverlässig in ihrer Wirkungsweise und kann einfach an Bord des Schiffes, welches den Probennehmer aussetzt, vorbereitet werden. Zunächst werden die Verschlusskappen gegen den Widerstand eines Gummizuges, der beispielsweise im Innern der Probenbehälter verlaufen kann, gegeneinander geöffnet und an einer Auslöserwelle fixiert. Diese wiederum wird von einem Korrosionsdraht ("burn wire") in der Auslöseposition festgehalten. Durch die zeitverzögerte Aktivierung des zeitgesteuerten Auslösers wird dann nach einer weiteren Zeitverzögerung nach dem Aufsetzen des Probennehmers auf den Meeresboden der Korrosionsdraht unter Spannung gesetzt. Im gut leitfähigen Meerwasser korrodiert dieser Draht dann in ein bis drei Minuten durch und gibt die Auslöserwelle frei, was das gleichzeitige Schließen aller Verschlussklappen bewirkt.

Weiterhin ist für eine ungestörte Probennahme wichtig, dass die Überführung der Wasserproben zur weiteren Untersuchung an Bord des Schiffes unter möglichst geringer Vermischung mit Luft erfolgt, um eine ungewollte Aufnahme bzw. Abgabe von Gasen aus bzw. an Atmosphäre zu verhindern. Dazu kann gemäß einer weiteren vorteilhaften Ausgestaltung der Erfindung jeder Probenbehälter ein Wasserauslaufventil und diametral gegenüberliegend ein Lufteinlassventil aufweisen Damit kann bei der Entnahme der Wasserproben aus den Probenbehältern die das ablaufende Wasser ersetzende Luft gleichmäßig in die Probenbehältern einströmen, ohne dass Wasser und Luft sich vermischen. Der Gasaustausch mit der Atmosphäre ist damit auf ein Minimum begrenzt. Vorteilhaft ist es nach einer nächsten Erfindungsausgestaltung, wenn die Probenbehälter transparent ausgeführt sind. Somit können Aussagen über den Partikelgehalt und auch über die Partikelform in den einzelnen Wasserproben getroffen werden. Dies kann bereits bei der Probennahme, beispielsweise mittels einer Probenkamera, oder vor der Probenentnahme an Bord des Schiffes durch Fotografieren oder einfaches Betrachten erfolgen.

Der Bodenwasser-Probennehmer ist für große Wassertiefen geeignet. Durch die in diesen Tiefen herrschenden Druckverhältnisse hat das Wasser ein bestimmtes Gasaufnahmevermögen. Um Ausgasungen bei der Proben-überführung in Gebiete mit niedrigerem Druck (bis hin zum Atmosphärendruck) zu verhindern, können die Probenbehälter gemäß einer weiteren Erfindungsfortführung - alternativ zu einer transparenten Ausführung - und beide Verschlussvorrichtungen auch druckfest ausgeführt sein. Durch den damit verbundenen vollständigen Erhalt des originalen Wasserzustandes können bei der Auswertung der Wasserproben wertvolle Zusatzerkenntnisse gewonnen werden. Bei einer druckfesten Ausführung der Probenbehälter für Meerestiefen bis 6000 m können diese aus einem druckfesten Material, insbesondere aus Stahl oder Speziallegierungen, beispielsweise mit Titan, hergestellt sein.

Die Bodenwassersäule sollte auf ca. 2 Metern über Grund hochauflösend auf mehreren Wasserhorizonten beprobt werden können, wobei für Isotopenanalysen mindestens 5 Liter pro Horizont gebraucht werden. Deshalb ist es gemäß einer nächsten Weiterbildung des Bodenwasser-Probennehmers vorteilhaft, wenn insgesamt sechs Probenbehälter auf einer Höhe von 2 m angeordnet sind und die Probenbehälter ein Füllvolumen von 5 I bis 6 I aufweisen. Durch die sechs Probenbehälter werden sechs Wasserhorizonte beprobt, die mit einem vertikalen Abstand von ca. 30 cm zueinander verlaufen, sodass eine hohe Messauflösung der vertikalen Wassersäule gewährleistet ist. Dabei sei an dieser Stelle darauf hingewiesen, dass die einzelnen Probenbehälter an der zentralen Haltestange sowohl mit einem konstanten Abstand zueinander als auch mit einem veränderlichen Abstand angeordnet werden können. Die Anzahl und die Positionierung der Probenbehälter ist abhängig vom zu erstellenden Auflösungsprofil, das seinerseits von dem auftretenden Messgrößen abhängig ist. Bei 6 höhenjustierbar, horizontal angebrachten Probenbehältern von beispielsweise ca. 6 Liter Volumen stammen die einzelnen Wasserproben aus jeweils ca. 10 cm dicken Wasserschichten, die ausreichend dicht nebeneinander liegen ohne sich jedoch gegenseitig zu beeinflussen.

Da der Bodenwasser-Probennehmer nach der Erfindung auf Abstützungen und Abspannungen, die die Bodenströmung stören, verzichtet, wird die stabile Vertikalposition des Gerätes durch den mit einem Grundgewicht, beispielsweise aus Blei, beschwerten Grundrahmen gewährleistet. Zusätzlich kann gemäß einer anderen Erfindungsausgestaltung vorgesehen sein, dass oberhalb des Probennehmers mehrere Auftriebskörper am Stahlseil befestigt sind. Beispielsweise werden zwei Auftriebskörper ca. 15 m über dem Probennehmer angebracht und verhindern zusammen mit dem Grundgewicht wirksam ein Umstürzen des Bodenwasser-Probennehmers nach der Erfindung.

Eine bevorzugte **Ausbildungsform der Erfindung** wird nachfolgend anhand der schematischen Figuren näher erläutert. Dabei zeigt :
- **Figur 1**: Diagramme mit typischen Parameterverläufen und
- **Figur 2**: eine Ausführungsform des Bodenwasser-Probennehmers nach der Erfindung.

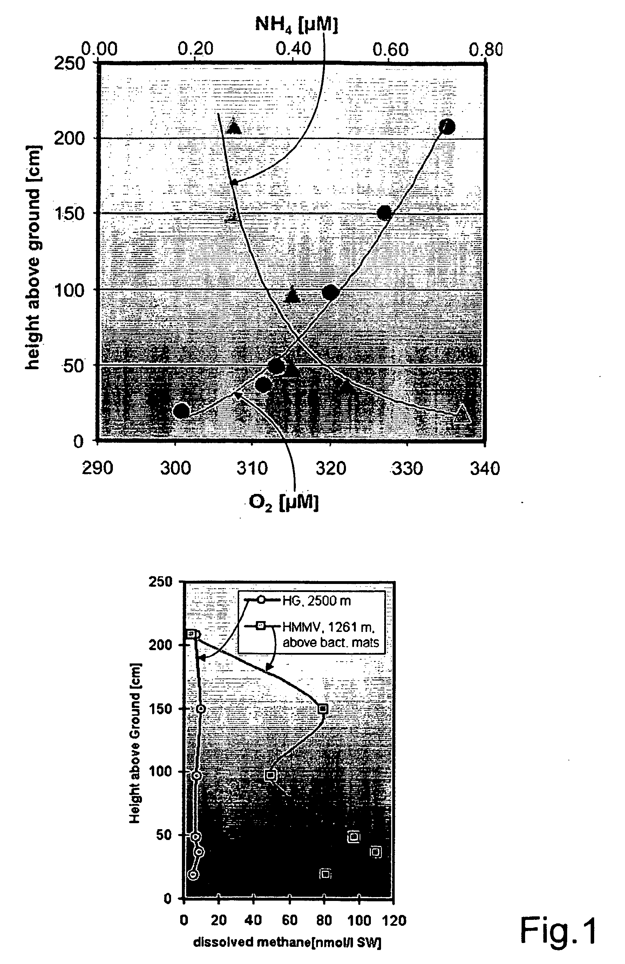

Die Hauptaufgabe des Bodenwasser-Probennehmers nach der Erfindung besteht in der vertikal gestaffelten Probennahme mit hochauflösender Qualität, um vertikale Messprofile erstellen zu können. Insbesondere im Übergangsbereich zwischen dem Gewässerboden und der darüber liegenden Wassersäule bis in einen Bereich von ca. 2 m zeigen die zu erfassenden Messgrößen oft steile Gradienten. Diese sind beispielsweise in der **Figur 1** erkennbar, die im oberen Diagramm den Verlauf des Sauerstoffgehalts O₂ und des Ammoniumgehalts NH₄⁺ in µM (Mikromol) über der Höhe über Grund (height above ground) in cm an dem Messort "AWI-Hausgarten" westlich von Spitzbergen in 2500 m Meerestiefe zeigt. Im unteren Diagramm in der Figur 1 ist im Vergleich dazu der Gehalt an gelöstem Methan (dissolved methane in nmol pro L Meerwasser) im Bodenwasser wiederum über der Lokation "AWI-Hausgarten" in 2500 m Tiefe (linke Kurve, geringe Werte) und zusätzlich über dem "Hakon Mosby" -Schlammvulkan in 1260 m Tiefe (rechte Kurve, hohe Werte) gezeigt. Deutlich sind hier die unterschiedlichen Parameterverläufe in verschiedenen Höhen über einem gewöhnlichen Tiefsee-Sediment ("AWI-Hausgarten") bzw. über der Oberfläche des Schlammvulkans in der bodennahen Wassersäule zu erkennen, die sich erst ab einer Höhe von ca. 2 m einander annähern.

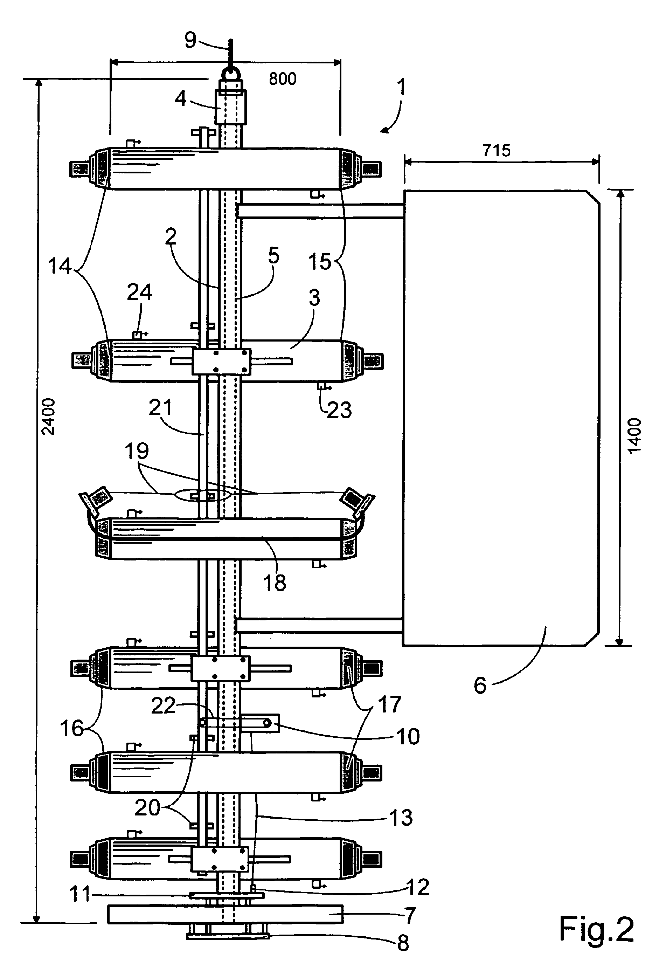

In der **Figur 2** ist eine Ausführungsform des Bodenwasser-Probennehmers **1** nach der Erfindung zur simultanen Gewinnung von mehreren Wasserproben auf unterschiedlichen Höhen aus der untersten Wassersäule oberhalb eines Gewässerbodens gezeigt (Maßangaben in mm). An einer zentralen Haltestange **2** sind sechs Probenbehälter **3** in unterschiedlichen Höhen angeordnet. Dabei nehmen die Abstände im gewählten Ausführungsbeispiel über eine Länge von ca. 2 m nach oben hin zu, so dass eine besonders hohe Auflösung in der untersten, bodennahen Wasserschicht umgesetzt werden kann. Die zentrale Haltestange **2** ist mittels eines Lagers **4** an einer durch sie hindurch geführten zentralen Welle **5** leichtgängig und frei drehbar aufgehängt und weist zur Ausrichtung in der bodennahen Wasserströmung eine rechteckige Strömungsfahne **6** auf, die im gewählten Ausführungsbeispiel ungefähr 1 m² groß ist. Das untere Ende der zentralen Welle **5** ist fest mit einem durch Bleigewichte beschwerten Grundrahmen **7** verbunden. Im Zentrum des Grundrahmens **7** ist eine vertikal bewegliche Auslöserplatte **8** angebracht. An das obere Ende der zentralen Welle **5** wird vermittels eines Schäkels ein gewöhnliches Stahlseil **9** angeschlagen, an welches etliche Meter über dem Bodenwasser-Probennehmer **1** ein in der Figur 2 nicht weiter dargestellter Auftriebskörper zur vertikalen Straffhaltung des Stahlseils **9** angebracht wird. Durch die Straffhaltung und den bleibeschwerten Grundrahmen **7** wird eine sichere vertikale Standposition des Bodenwasser-Probennehmers **1** erreicht. Diese wird noch unterstützt durch eine alternierende Anordnung der Probenbehälter **3** vor und hinter der zentralen Haltestange **2.**

Die Auslöserplatte **8** ist mit einem zeitgesteuerten Auslöser **10** verbunden, der beim Aufsetzen des Bodenwasser-Probennehmers **1** durch leichtes, aber andauerndes Hochdrücken der Auslöserplatte **8** nach einer vorgegebenen Zeitverzögerung, beispielsweise einer Minute, aktiviert wird. Um die freie Drehbarkeit der zentralen Haltestange **2** um die zentrale Welle **5** nicht durch Kabelführungen zu beeinträchtigen, wird das von der Auslöserplatte **8** gemeldete Aufsetzsignal über einen Schleifring **11** auf einen druckfesten Magnetkontakt **12** übertragen, der das Signal über ein Unterwasserkabel **13** an den zeitgesteuerten Auslöser **10** überträgt. Beim Abfieren des Bodenwasser-Probennehmers **1** sind alle Probenbehälter **3,** die im gewählten Ausführungsbeispiel als transparente Zylinder ausgeführt sind, an beiden Stirnseiten **14, 15** geöffnet (in der Figur **2** an einem Probenbehälter **3** exemplarisch dargestellt). Die Probenbehälter **3** weisen jeweils zwei Verschlussvorrichtungen **16** mit Verschlussklappen **17** auf. Diese sind im geöffneten Zustand über einen Gummizug **18** durch das Innere der Probenbehälter **3** vorgespannt und werden von Haltesehnen **19** gesichert, welche in Querbolzen **20** der um die Horizontale drehbaren Auslöserwelle **21** eingehängt sind. Die Stellung der Auslöserwelle **21** wird durch einen Korrosionsdraht **22** fixiert. Bei Aktivierung des zeitgesteuerten Auslösers **10** wird der Korrosionsdraht **22** nach einer in der Zeitsteuerung elektronisch oder auch mechanisch einstellbaren Vorlaufzeit über eine in der Figur **2** nicht weiter dargestellte elektrische Verbindungsleitung unter Spannung gesetzt und korrodiert im gut leitenden Seewasser innerhalb von ein bis drei Minuten in Abhängigkeit von der gewählten Drahtstärke und dem Drahtmaterial durch. Die nunmehr nicht länger in ihrer Stellung fixierte Auslöserwelle **21** dreht sich unter der Zuglast der Gummizüge **18** aller Probenbehälter **3** soweit, das die Querbolzen **20** die Haltesehnen **19** der Verschlussklappen **17** freigeben. Dadurch verschließen die Verschlussklappen **17** alle Probenbehälter **3** nahezu augenblicklich an beiden Stirnseiten **14, 15,** wodurch das momentan durch die Probenbehälter **3** strömende Bodenwasser der verschiedenen Wasserhorizonten eingefangen wird. Der zeitgesteuerte Auslöser **10** wird über die Auslöserplatte **8** mechanisch aktiviert, die Korrosionsspannung zur Auslösung der Verschlussvorrichtung **16** wird von einer in den zeitgesteuerten Auslöser **10** integrierten Stromversorgung zur Verfügung gestellt. Somit ist der Bodenwasser-Probennehmer **1** nach der Erfindung autark und kann über das einfache Stahlseil **9** gefiert werden, ein impulsgebendes Einleiterkabel ist nicht erforderlich. Zum störungsfreien Entleeren der eingefangenen Bodenwasserproben an Bord des Schiffes weisen die Probenbehälter ein Wasserauslaufventil **23** und diametral gegenüberliegend ein Lufteinlassventil **24** auf. An das Wasserauslaufventil **23** wird zur Probenentnahme über einen dünnen Schlauch eine Probenlagerflasche angeschlossen. Zur Entleerung werden beide Ventile geöffnet. Auf diese Weise wird eine Durchmischung der einströmenden Luft mit dem ausströmenden Probenwasser vermieden.

Der Bodenwasser-Probennehmer nach der Erfindung ist ein einfaches, aber zuverlässiges Beprobungsgerät, mit dem hervorragende Messergebnisse zu erreichen sind. Interne Erprobungen eines Prototyps des beanspruchten Messgeräts durch den Anmelder im Nordatlantik in 1260 m und 2500 m Tiefe sowie in der Eckernförder Bucht in 25 m Tiefe auf die in der bodennahen Strömung zu profilierenden Messparameter Methan, Sauerstoff, Bakterienabundanzen, Nährstoffe, Methan, 222-Radon und Meerwassersalzgehalt bei Probennahmezeiten von maximal sieben Minuten bestätigen dies.

### Bezugszeichenliste

- **1**: Bodenwasser-Probennehmer
- **2**: zentrale Haltestange
- **3**: Probenbehälter
- **4**: Lager
- **5**: zentrale Welle
- **6**: Strömungsfahne
- **7**: beschwerter Grundrahmen
- **8**: Auslöserplatte
- **9**: Stahlseil
- **10**: zeitgesteuerter Auslöser
- **11**: Schleifring
- **12**: Magnetkontakt
- **13**: Unterwasserkabel
- **14**: Stirnseite
- **15**: Stirnseite
- **16**: Verschlussvorrichtung
- **17**: Verschlussklappe
- **18**: Gummizug
- **19**: Haltesehne
- **20**: Querbolzen
- **21**: Auslöserwelle
- **22**: Korrosionsdraht
- **23**: Wasserauslaufventil
- **24**: Lufteinlassventil

## Patentansprüche

1. Bodenwasser-Probennehmer (1) zur simultanen Gewinnung von mehreren Wasserproben aus der untersten Wassersäule auf unterschiedlichen Höhen oberhalb eines Gewässerbodens mit mehreren zylinderförmigen Proben-behältern (3), die zumindest auf einer Stirnseite eine über einen zeitgesteuerten Auslöser (10) betätigbare Verschlussvorrichtung (16) aufweisen und an einer zentralen, in einem Bodenelement endenden und an ihrem gegenüber liegenden Ende über ein Stahlseil (9) auf dem Gewässerboden absetzbaren Haltestange (2) höhenverstellbar in horizontaler Ausrichtung angeordnet sind,
**dadurch gekennzeichnet, dass**
die zentrale Haltestange (2) zwischen einem beschwerten Grundrahmen (7) als Bodenelement und dem Stahlseil (9) leichtgängig und frei drehbar befestigt und mit einer Strömungsfahne (6) verbunden ist, dass der zeitgesteuerte Auslöser (10) in den beschwerten Grundrahmen (7) druckgekapselt eingebaut und erst durch dessen anhaltendes Aufsetzen auf den Gewässerboden für eine vorgegebene Zeitspanne automatisch aktiviert wird und dass die Probenbehälter (3) auch auf der anderen Stirnseite (15) eine ebenfalls über den zeitgesteuerten Auslöser (10) betätigbare Verschlussvorrichtung (16) aufweisen.

2. Bodenwasser-Probennehmer nach Anspruch1,
**dadurch gekennzeichnet, dass**
die beiden Verschlussvorrichtungen (16) jedes Probenbehälters (3) Verschlussklappen (17) aufweisen, die im geöffneten Zustand gegen einen rückstellenden Gummizug (18) über eine mit einem Korrosionsdraht (22) verriegelte Auslöserwelle (21) fixiert sind, wobei der Korrosionsdraht (22) durch die Aktivierung des zeitgesteuerten Auslösers (10) unter eine zum Bersten führende elektrische Spannung gesetzt wird.

3. Bodenwasser-Probennehmer nach Anspruch 1 oder 2,
**dadurch gekennzeichnet, dass**
jeder Probenbehälter (3) ein Wasserauslaufventil (23) und diametral gegenüberliegend ein Lufteinlassventil (24) aufweist.

4. Bodenwasser-Probennehmer nach einem der Ansprüche 1 bis 3,
**dadurch gekennzeichnet, dass**
die Probenbehälter (3) transparent ausgeführt sind.

5. Bodenwasser-Probennehmer nach einem der Ansprüche 1 bis 3,
**dadurch gekennzeichnet, dass**
die Probenbehälter (3) und beide Verschlussvorrichtungen (16) druckfest ausgeführt sind.

6. Bodenwasser-Probennehmer nach einem der Ansprüche 1 bis 5,
**dadurch gekennzeichnet, dass**
insgesamt sechs Probenbehälter (3) auf einer Höhe von 2 m angeordnet sind und jeder Probenbehälter (3) ein Füllvolumen von 5 bis 6 I aufweisen.

7. Bodenwasser-Probennehmer nach einem der Ansprüche 1 bis 6,
**dadurch gekennzeichnet, dass**
oberhalb des Probennehmers (1) ein oder mehrere Auftriebskörper am Stahlseil (9) befestigt sind.

## Claims

1. Bed water sampling device (1) for simultaneously obtaining a plurality of water samples from the lowest water column at different levels above the bed of a body of water, with a plurality of cylinder-shaped sample containers (3) which have at least on one end face a closure device (16) which can be actuated by means of a time-controlled trigger (10), and which containers are arranged in a height-adjustable manner in horizontal alignment on a central retainer rod (2) which ends in a bed element and can placed on the bed of the body of water at its opposite end by means of a steel cable (9),
**characterised in that**
the central retainer rod (2) is fastened between a loaded base frame (7) as the bed element and the steel cable (9) in such a manner that it can move smoothly and rotate freely and is connected to a flow vane (6), that the time-controlled trigger (10) is built into the loaded base frame (7) in a pressure-encapsulated manner and is activated automatically only when it is placed continuously on the bed of the body of water for a predetermined time span, and that the sample containers (3) also have on the other end face (15) a closure device (16) which can likewise be actuated by means of the time-controlled trigger (10).

2. Bed water sampling device according to Claim 1,
**characterised in that**
the two closure devices (16) of each sample container (3) have closure flaps (17) which are fixed in the open state against a restoring rubber pull (18) by means of a trigger shaft (21) which is locked with a burn wire (22), wherein the burn wire (22) is subjected to an electrical voltage which leads to rupture by means of the activation of the time-controlled trigger (10).

3. Bed water sampling device according to Claim 1 or 2,
**characterised in that**
each sample container (3) has a water outlet valve (23) and an air inlet valve (24) situated diametrically opposite.

4. Bed water sampling device according to one of Claims 1 to 3,
**characterised in that**
the sample containers (3) are configured to be transparent.

5. Bed water sampling device according to one of Claims 1 to 3,
**characterised in that**
the sample containers (3) and both closure devices (16) are configured to be pressure-resistant.

6. Bed water sampling device according to one of Claims 1 to 5,
**characterised in that**
a total of six sample containers (3) are arranged at a height of 2 m and each sample container (3) has a capacity of 5 to 6 1.

7. Bed water sampling device according to one of Claims 1 to 6,
**characterised in that**
one or a plurality of drive bodies are fastened on the steel cable (9) above the sampling device (1).

## Revendications

1. Echantillonneur (1) d'eau de sol, pour le prélèvement simultané de plusieurs échantillons d'eau à partir de la colonne d'eau la plus profonde, à différentes hauteurs au-dessus d'un fond marin, avec plusieurs conteneurs à échantillons (3) cylindriques comportant, au moins sur une face frontale, un dispositif de fermeture (16) actionnable à l'aide d'un déclencheur (10) commandé dans le temps, et étant disposés avec une orientation horizontale, de façon réglable en hauteur, sur une tige de fixation (2) centrale, qui peut être déposée sur le fond marin par son extrémité opposée au moyen d'un câble d'acier (9) et qui se termine dans un élément du sol,
**caractérisé en ce que**
la tige de fixation centrale (2) est fixée de façon librement rotative et sans effort entre un cadre de fond (7) lesté en guise d'élément de fond et le câble d'acier (9), et est reliée à une pale à flux (6), **en ce que** le déclencheur (10) commandé dans le temps est incorporé de façon antidéflagrante dans le cadre de fond (7) lesté, et est seulement activé automatiquement pendant un laps de temps prédéfini au moment où le cadre est attaché au fond de l'eau, et **en ce que** sur leur autre face frontale (15), les conteneurs d'échantillons (3) comportent également un dispositif de fermeture (16), également actionnable à l'aide du déclencheur (10) commandé dans le temps.

2. Echantillonneur d'eau de fond selon la revendication 1,
**caractérisé en ce que**
les deux dispositifs de fermeture (16) de chaque conteneur à échantillons (3) comportent des clapets d'obturation (17), qui à l'état ouvert sont fixés contre une sangle de rappel en caoutchouc (18) par le biais d'un arbre du déclencheur (21) verrouillée avec un fil de corrosion (22), le fil de corrosion (22) étant mis sous une tension électrique entraînant l'éclatement, par l'activation du déclencheur (10) commandé dans le temps.

3. Echantillonneur d'eau de fond selon la revendication 1 ou 2,
**caractérisé en ce que**
chaque conteneur à échantillons (3) comporte une vanne de sortie d'eau (23) et une vanne d'entrée d'air (24) du côté diamétralement opposé.

4. Echantillonneur d'eau de fond selon l'une des revendication 1 à 3,
**caractérisé en ce que**
les conteneurs à échantillons (3) sont transparents.

5. Echantillonneur d'eau de fond selon l'une des revendications 1 à 3,
**caractérisé en ce que**
les conteneurs à échantillons (3) et les deux dispositifs de fermeture (16) sont conçus de façon à résister à la pression.

6. Echantillonneur d'eau de fond selon l'une des revendications 1 à 5,
**caractérisé en ce que**
dans l'ensemble, six conteneurs à échantillons (3) sont disposés à une hauteur de 2 mètres et chaque conteneur à échantillons (3) offre un volume de remplissage de 5 à 6 litres.

7. Echantillonneur d'eau de fond selon l'une des revendications 1 à 6,
**caractérisé en ce que**
un ou plusieurs corps sont fixés au câble d'acier (9) au-dessus de l'échantillonneur (1).
